(19) Europäisches Patentamt
European Patent Office
Office européen des brevets

(11) **EP 3 482 130 B1**

(12) **FASCICULE DE BREVET EUROPEEN**

(45) Date de publication et mention
de la délivrance du brevet:
**22.12.2021  Bulletin 2021/51**

(21) Numéro de dépôt: **17742818.2**

(22) Date de dépôt: **29.06.2017**

(51) Int Cl.:
*F23L 15/04* *(2006.01)*　　*F27D 17/00* *(2006.01)*
*F27B 3/20* *(2006.01)*　　*F27B 3/22* *(2006.01)*
*F27B 7/34* *(2006.01)*　　*F27B 7/36* *(2006.01)*

(86) Numéro de dépôt international:
**PCT/FR2017/051740**

(87) Numéro de publication internationale:
**WO 2018/007721 (11.01.2018 Gazette 2018/02)**

(54) **PROCÉDÉ DE FONCTIONNEMENT D'UN FOUR DISCONTINU AVEC PRÉCHAUFFAGE D'UN FLUIDE EN AMONT DU FOUR**

VERFAHREN ZUM BETRIEB EINES DISKONTINUIERLICHEN OFENS MIT VORWÄRME EINER FLÜSSIGKEIT STROMAUFWÄRTS DES OFENS

METHOD FOR OPERATING A DISCONTINUOUS OVEN WITH PREHEATING A FLUID UPSTREAM OF THE OVEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:　**08.07.2016　FR 1656588**

(43) Date de publication de la demande:
**15.05.2019　Bulletin 2019/20**

(73) Titulaire: **L'AIR LIQUIDE, Société Anonyme pour l'Etude
et l'Exploitation des Procédés Georges Claude
75007 Paris (FR)**

(72) Inventeurs:
• **JARRY, Luc
  61270 BEAUFAI (FR)**
• **VAN KAMPEN, Peter
  Shanghai, 200233 (CN)**

(74) Mandataire: **Air Liquide
L'Air Liquide S.A.
Direction de la Propriété Intellectuelle
75, Quai d'Orsay
75321 Paris Cedex 07 (FR)**

(56) Documents cités:
**WO-A2-2006/054015**

**Description**

La présente invention concerne le préchauffage d'un fluide en amont d'un four par échange thermique avec des fumées évacuées du four.

Il est connu d'utiliser la chaleur présente dans les fumées évacuées pour préchauffer de l'air de combustion en amont du four au moyen de régénérateurs fonctionnant en alternance :

（a) les fumées étant d'abord envoyées à travers un régénérateur de manière à chauffer le régénérateur et (b) l'air de combustion étant ensuite chauffé en passant à travers le régénérateur ainsi chauffé. Les fumées évacuées et l'air de combustion traversent donc un même volume à l'intérieur des régénérateurs, mais à des moments distincts. Pour des raisons de sécurité, une telle méthode dans laquelle les fumées chaudes et le fluide à chauffer traversent un même volume n'est pas adaptée pour le préchauffage d'un combustible ou d'un oxydant riche en oxygène.

Il est également connu de préchauffer un oxydant de combustion et/ou un combustible en amont d'un four par échange thermique avec les fumées évacuées dans un ou plusieurs échangeurs de chaleur (souvent appelés récupérateurs) dans lesquels les fumées évacuées et le fluide à chauffer circulent dans des circuits séparés. Il est alors nécessaire d'assurer l'étanchéité entre le circuit du fluide à préchauffer et le circuit des fumées évacuées de manière à éviter tout contact direct entre les fumées et le fluide. Dans le présent contexte, les expressions « échange thermique » ou « échange de chaleur » se réfèrent à de tels procédés dans lesquels le fluide chaud et le fluide à chauffer circulent dans des circuits séparés sans mélange ou contact direct entre les deux fluides.

Distinction est faite entre l'échange thermique direct et l'échange thermique indirect.

Lors d'un échange thermique direct, un fluide est chauffé avec un fluide plus chaud par échange thermique à travers une paroi qui sépare le fluide à chauffer du fluide plus chaud.

Par échange thermique indirect, on comprend un échange thermique en deux étapes d'échange direct en passant par un fluide intermédiaire.

La société Air Liquide a développé et industrialise une telle technologie de préchauffage particulièrement fiable et appropriée pour le préchauffage d'un oxydant à haute teneur en oxygène par échange thermique indirect entre le fluide à préchauffer et les fumées évacuées du four. Ainsi, dans la technologie de préchauffage de la société Air Liquide :

• un fluide intermédiaire est chauffé par échange thermique direct avec les fumées à travers une première paroi dans une première étape et

• dans une deuxième étape l'oxygène de combustion (et le cas échéant aussi le combustible) est (sont) préchauffé(s) par échange thermique direct avec le fluide intermédiaire chauffé dans la première étape à travers une deuxième paroi.

Une telle technologie est notamment décrite dans WO 2006/054015. Cette technologie permet des gains en efficacité considérables dans le cas de fours qui génèrent en continu un débit suffisant de fumées chaudes permettant le préchauffage à une température désirée de l'oxygène et/ou du combustible.

Pour des raisons de sécurité, il est important d'éviter des fuites entre les différents circuits. De telles fuites peuvent résulter d'un choc thermique et en particulier de changements de température brusques et répétés qui sont susceptibles de fragiliser les parois et les joints des échangeurs de chaleur.

Les fumées évacuées d'un four industriel peuvent facilement atteindre des températures entre 600°C et 1550°C. Il convient donc d'amener le ou les échangeurs de chaleur lentement et progressivement à leur température opérationnelle, c'est-à-dire d'amener progressivement les différentes parties du ou des échangeurs de chaleur à la température qu'elles auront pendant le préchauffage du fluide.

De manière analogue, il convient d'amener le ou les échangeurs graduellement vers la température ambiante quand on arrête la combustion dans le four et qu'il n'y a plus d'évacuation de fumées chaudes du four.

Une telle mise à température et un tel refroidissement du ou des échangeurs de chaleur peuvent prendre un temps non-négligeable.

Dans l'industrie, distinction est faite entre les fours continus et les fours discontinus.

Les fours continus sont chauffés en continu pendant toute la campagne qui peut durer des mois, voire des années.

L'opération de fours discontinus, par contre, est caractérisée par des cycles répétés :

a) d'une étape de chauffe, pendant laquelle le four est chauffé par combustion d'un combustible avec un oxydant, avec génération de chaleur et de fumées chaudes, lesdites fumées chaudes étant alors évacuées du four par une canalisation d'évacuation ; et
b) d'une étape d'arrêt pendant laquelle la combustion du combustible avec l'oxydant dans le four et l'évacuation de fumées chaudes du four par la canalisation sont interrompues.

Cette alternance entre des périodes avec et sans production de fumées chaudes rendent les méthodes connues pour le préchauffage d'un réactif de combustion par échange thermique avec les fumées évacuées dans un ou plusieurs échangeurs inadaptées pour une mise en œuvre sur un four discontinu, car entrainant des variations de température importantes, brusques et répétées notamment au niveau de la paroi qui sépare les fumées évacuées de, respectivement, le fluide à chauffer ou le fluide intermédiaire.

La présente invention a pour but de fournir une technologie de préchauffage indirect qui est adapté pour des fours discontinus. La présente invention a plus particulièrement pour but de permettre une récupération de chaleur des fumées évacuées fiable et efficace pour les fours discontinus au moyen d'une technologie de préchauffage indirect.

A cette fin, l'invention propose un procédé de fonctionnement d'un four comportant une étape de chauffe pendant laquelle on met en œuvre la technologie de préchauffage indirect décrite ci-dessus. Ainsi, pendant l'étape de chauffe :

(a) un combustible et un oxydant sont fournis au four et le four est chauffé par combustion du combustible avec l'oxydant avec génération de chaleur et de fumées de combustion, les fumées étant évacuées du four par une canalisation et

(b) on préchauffe au moins un fluide choisi parmi le combustible et l'oxydant en amont du four au moyen des fumées évacuées du four :

- en introduisant un débit Dm (>0) d'un milieu liquide ou gazeux dans une chambre et en chauffant ledit milieu par échange thermique avec les fumées dans la canalisation à travers une première paroi qui sépare le milieu dans la chambre des fumées dans la canalisation avec obtention d'un milieu chauffé, la première paroi présentant alors une température dite « température opérationnelle » ; et
- en introduisant un débit Df (>0) du fluide à préchauffer dans au moins un conduit de manière à préchauffer le fluide par échange thermique avec le milieu chauffé dans la chambre à travers une deuxième paroi qui sépare le fluide dans le au moins un conduit du milieu chauffé dans la chambre.

Le procédé de fonctionnement du four comporte des cycles répétés de l'étape de chauffe sus-décrite suivie d'une étape d'arrêt et d'une étape de redémarrage, l'étape de redémarrage faisant le pont entre l'étape d'arrêt et l'étape de chauffe suivante.

Pendant l'étape d'arrêt :

- la fourniture du combustible et de l'oxydant au four et la combustion du combustible avec l'oxydant dans le four sont interrompues ainsi que, évidemment, l'évacuation de fumées du four par la canalisation.

Suivant l'invention, à partir du début de chaque étape d'arrêt, c'est-à-dire quand la combustion du combustible dans le four est arrêtée, et pendant toute l'étape d'arrêt, le débit Dm du milieu dans la chambre est réduit d'au moins 50%, de préférence d'au moins 75% et encore de préférence d'au moins 90%. Le débit Dm du milieu dans la chambre peut notamment être arrêté (Dm = 0) à partir du début de chaque étape d'arrêt. En ralentissant, voire en limitant, ainsi le refroidissement de la paroi (première paroi) qui sépare les fumées évacuées dans la canalisation du fluide intermédiaire, des chocs thermiques au niveau de cette première paroi sont évités au début de chaque étape d'arrêt.

Egalement suivant l'invention, la combustion dans le four du combustible avec l'oxydant et l'évacuation des fumées par la canalisation redémarrent au début de l'étape de redémarrage. Le débit Dm du milieu dans la chambre est simultanément augmenté de manière contrôlée et ensuite régulé de manière à limiter la vitesse de chauffe de la paroi (première paroi) qui sépare les fumées évacuées dans la canalisation du fluide intermédiaire dans la chambre jusqu'à ce que la première paroi atteigne la température opérationnelle au début de l'étape de chauffe qui suit.

La vitesse de refroidissement $V_{T\downarrow}$ et la vitesse de chauffe $V_{T\uparrow}$ de la première paroi sont définies comme : $\dfrac{|\Delta T|}{|\Delta t|}$ et sont exprimées en K/s.

Pour éviter une fragilisation thermique de l'échangeur de chaleur au niveau de la première paroi, la vitesse de refroidissement $V_{T\downarrow}$ et la vitesse de chauffe $V_{T\uparrow}$ ne doivent pas dépasser leurs limites supérieures respectives $V_{T\downarrow max}$ et $V_{T\uparrow max}$. Lesdites limites supérieures $V_{T\downarrow max}$ et $V_{T\uparrow max}$ peuvent être identiques ou différentes (en valeurs absolues). Elles dépendent des matériaux qui forment la première paroi ainsi que des connections (par exemple les soudures) qui relient la première paroi au reste de l'échangeur de chaleur. En effet, certains matériaux ou combinaisons de matériaux supportent mieux les changements de températures que d'autres.

En régulant, de la manière décrite ci-dessus, le débit Dm du fluide intermédiaire pendant les étapes d'arrêt et les étapes de redémarrage, il est possible de limiter et de ralentir le refroidissement de la première paroi pendant l'étape d'arrêt, de manière à ce que $V_{T\downarrow}$ ne dépasse pas $V_{T\downarrow max}$, ainsi que de limiter la vitesse de chauffe $V_{T\uparrow}$ de la première paroi de manière à ce qu'elle ne dépasse pas $V_{T\uparrow max}$ tout en limitant le temps nécessaire pour que la première paroi atteigne sa température opérationnelle. L'invention permet ainsi de bénéficier en toute sécurité des avantages énergétiques du préchauffage du combustible ou du comburant avec la chaleur présente dans les fumées évacuées dans l'installation d'un four discontinu tout en limitant les pertes de temps liées à la mise à température nécessairement contrôlés de (la première paroi de) l'échangeur de chaleur.

Les critères utilisés pour la sélection de l'évolution du débit Dm du fluide intermédiaire pendant l'étape de redémarrage sont : de réaliser une vitesse de chauffe $V_{T\uparrow}$ élevée de la première paroi tout en respectant la limite supérieure $V_{T\uparrow max}$ de ladite vitesse de chauffe.

Quand la première paroi est assez sensible aux chocs thermiques, c'est-à-dire quand $V_{T\uparrow max}$ est relativement faible, et/ou quand la température des fumées évacuées du four atteint un niveau important, ce qui entraîne un risque important de montée rapide de la température de la première paroi, on peut, pendant l'étape de redémarrage, faire monter le débit Dm du fluide intermédiaire à un niveau supérieur au débit Dm du fluide intermédiaire au début des étapes de chauffe avant de réduire le débit Dm jusqu'à ce dernier niveau au début de l'étape de chauffe qui suit.

Quand, par contre, le risque de fragilisation thermique de la première paroi est relativement faible, $V_{T\uparrow max}$ relativement élevée et/ou la température des fumées évacuées relativement basse, le Dm peut rester, pendant l'étape de redémarrage, en-dessous du débit Dm au début des étapes de chauffe.

Il est à noter que pendant les étapes de chauffe, la première paroi présente typiquement un profil de température dans la direction d'écoulement des fumées évacuées. L'expression « température opérationnelle » telle qu'utilisée dans le présent contexte se réfère ainsi à la température de la paroi à un endroit spécifique de la première paroi choisi comme point de référence.

Suivant une première forme de réalisation, le débit Dm est varié pendant les étapes de redémarrage suivant une fonction prédéterminé. Cette fonction peut être prédéterminée de manière expérimentale ou par calcul (bilan énergétique).

Suivant une autre forme de réalisation, on détecte le gradient (évolution dans le temps) d'une température de la première paroi (par exemple au moyen d'un thermocouple) et on régule le débit Dm en fonction de la vitesse de chauffe $V_{T\uparrow}$ de la première paroi ainsi déterminée en respectant les critères décrits ci-dessus.

L'étape de chauffe peut être une étape de traitement thermique d'une charge dans le four, par exemple la fusion ou le réchauffage d'une charge présente dans le four.

L'étape d'arrêt peut inclure une étape de vidange (totale ou partielle) du four (évacuation de la charge après traitement thermique) suivie d'une introduction d'une nouvelle charge (totale ou partielle) dans le four.

Comme déjà indiqué ci-dessus, la deuxième paroi, qui n'est pas en contact direct avec les fumées chaudes évacuées du four, subit des variations de température moins importante. La régulation de l'évolution de la température de cette deuxième paroi au cours du fonctionnement du four est donc généralement moins critique.

Toutefois, il est possible de limiter les changements de température de la deuxième paroi et/ou de les rendre plus graduels, en particulier pendant l'étape de redémarrage, en fournissant pendant cette étape de redémarrage au moins une partie du fluide directement au four, sans que cette au moins une partie du fluide passe à travers le au moins un conduit du dispositif de préchauffage décrit ci-dessus. Suivant une forme de réalisation possible, le fluide fourni au four pendant l'étape de redémarrage est divisé en deux portions : une première portion et une seconde portion. La première portion du fluide est fournie directement au four sans passer à travers le au moins un conduit dédié audit fluide. La seconde portion du fluide est fournie au four après avoir traversée le au moins un conduit. L'échange thermique entre le milieu dans la chambre et le fluide à travers de la deuxième paroi est alors limité à la seconde portion du fluide. De manière avantageuse, le rapport entre (a) la seconde portion et (b) la somme de la première portion et la deuxième portion du fluide (c'est-à-dire le débit total du fluide fourni au four) augmente au cours de l'étape de démarrage.

De préférence, à la fin de l'étape de redémarrage, la seconde portion du fluide correspond à un débit de fluide préchauffé qui est fourni au four au début de l'étape de chauffe qui suit l'étape de redémarrage. En limitant ainsi la quantité de fluide qui traverse le au moins un conduit pendant au moins le début de l'étape de redémarrage, les variations de température (refroidissement er réchauffage) de la deuxième paroi sont réduites et rendues plus graduelles pendant l'étape de redémarrage. Suivant une forme de réalisation particulière, la seconde portion est égale à zéro au début de l'étape de redémarrage. En d'autre mots, la totalité du fluide fourni au four court-circuite le au moins un conduit du dispositif de préchauffage. A la fin de l'étape de redémarrage, la première portion est avantageusement égale à zéro, c'est-à-dire la totalité du fluide fourni au four traverse le au moins un conduit du dispositif de préchauffage en amont du four.

Typiquement, une charge chauffée est évacuée du four et une charge à chauffer est introduite dans le four lors de l'étape d'arrêt.

Le milieu utilisé comme fluide caloporteur pour le chauffage du fluide par échange indirect avec les fumées évacuées est de manière utile un milieu gazeux et en particulier un milieu gazeux choisi parmi de l'air, de l'azote, du $CO_2$ ou de la vapeur. L'utilisation d'air en tant que milieu est souvent préférable à cause de sa disponibilité et son innocuité.

Le procédé suivant l'invention est particulièrement utile quant le fluide à préchauffer est un oxydant riche en oxygène. Ainsi, le fluide à préchauffer peut être un oxydant avec une teneur en oxygène entre 50% vol et 100%vol, de préférence entre 80%vol et 100%vol et plus de préférence d'au moins 90%vol.

L'invention permet également de combiner le préchauffage de plusieurs fluides à préchauffer, par exemple de l'oxydant de combustion et du combustible, chaque fluide à préchauffer traversant alors au moins un conduit dédié audit fluide à préchauffer.

La présente invention peut être utile pour un grand nombre de types de fours discontinus, tels que, par exemple

- un four rotatif de fusion de fonte,
- un four rotatif de fusion de métaux non-ferreux, de préférence de seconde fusion de métaux non-ferreux,
- le four basculant de fusion de métaux non-ferreux, de préférence de seconde fusion de métaux non-ferreux,
- un four rotatif ou basculant pour la fusion des émaux, ou
- un four de fusion de métaux de type four à arc (en anglais : Electric Arc Furnace ou EAF), de préférence de seconde fusion de métaux.

La succession dans le temps des différentes étapes des cycles est avantageusement régulée de manière automatisée au moyen d'une unité de contrôle.

Pendant l'étape de chauffe, la température à laquelle le fluide est préchauffé peut être régulée en régulant le débit du milieu à l'intérieur de la chambre. Ce débit du milieu à l'intérieur de la chambre permet également d'éviter variations importantes dans la température de la première surface entre les fumées dans la canalisation et le milieu dans la chambre ainsi que de la deuxième paroi entre le fluide dans le au moins un conduit et le milieu dans la chambre pendant une étape de chauffe. Un tel procédé est décrit dans la demande de brevet FR 1656584 déposée le 8 juillet 2016.

La présente invention et ses avantages sont décrites plus en détail dans les exemples ci-après, référence étant faite aux figures 1 à 3, dans lesquelles :

- la figure 1 qui est une représentation schématique d'un procédé suivant l'invention et d'une installation pour sa mise en œuvre, et
- les figures 2 et 3 sont des représentations schématiques du débit Dm et de la température de la première paroi pendant les différentes étapes du procédé suivant deux formes de réalisation du procédé suivant l'invention.

Le four discontinu 1 est muni d'au moins un brûleur 2 pour la combustion d'un combustible avec un oxydant riche en oxygène, par exemple un oxydant ayant une teneur en oxygène de 97%vol au moins.

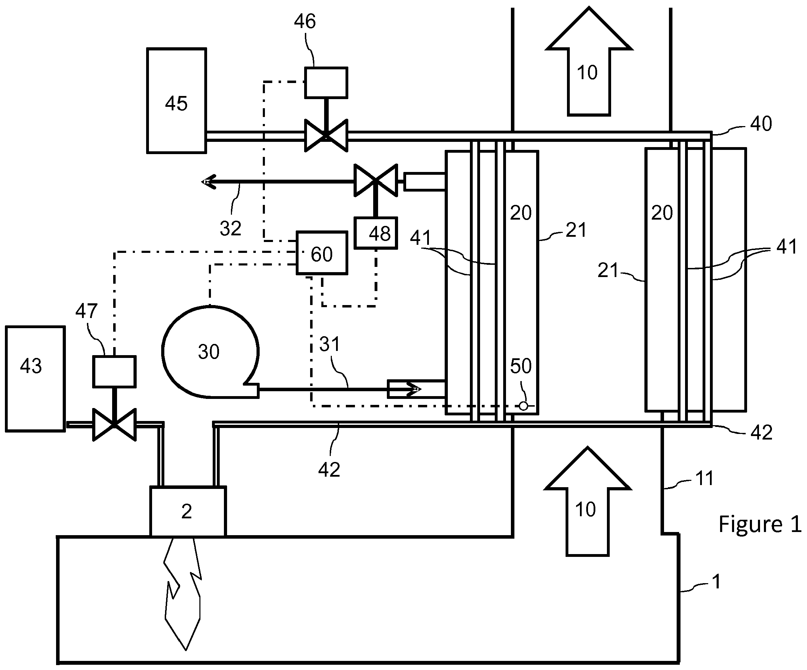

Bien qu'un seul brûleur soit montré dans la figure 1, le four peut comporter plusieurs tels brûleurs 2. La position du ou des brûleurs 2 dans le four dépend du type de four et du procédé auquel le four est destiné. Par exemple, dans un four rotatif, il est courant d'avoir un brûleur positionné dans le ou les extrémités longitudinales du cylindre constituant le four rotatif. Dans un four à réverbère (non-rotatif), le ou les brûleurs peuvent, par exemple, être montés dans la voûte, dans les parois latérales et/ou dans les parois transversales.

Le combustible, par exemple du gaz naturel, est fourni par une source de combustible 43 et l'oxydant par une source d'oxydant 45 tel qu'un réservoir d'oxygène liquéfié ou une unité de séparation des gaz de l'air.

Quand une combustion du combustible avec l'oxydant a lieu dans le four 1, ce qui est le cas pendant l'étape de chauffe et pendant l'étape de redémarrage, les fumées chaudes 10 générées par la combustion sont évacuées du four 1 par une canalisation 11.

Une chambre 20 entoure la canalisation d'évacuation des fumées 11.

Pendant l'étape de chauffe, une soufflante d'air ambiant 30 à vitesse variable introduit un débit Dm > 0 d'air ambiant 31 dans la chambre 20 de manière à créer un écoulement d'air dans la chambre 20 en co-courant avec l'écoulement des fumées 10 dans la canalisation 11. Le débit Dm d'air ambiant introduit dans la chambre 20 est déterminé par la vitesse de la soufflante 30.

Pendant l'étape de chauffe, le débit Dm d'air peut être constant ou variable.

Une première paroi 21 sépare physiquement les fumées 10 dans la canalisation 11 de l'air dans la chambre 20 de manière à permettre un échange thermique entre les fumées 10 dans la canalisation 11 et l'air dans la chambre 20 à travers cette deuxième paroi 21. L'air dans la chambre 20 absorbe ainsi une partie de la chaleur évacuée du four 1 par les fumées avec obtention d'air chauffé dans la chambre 20.

Toujours pendant l'étape de chauffe, un débit Df >0 du fluide à préchauffer 40 est introduit dans un faisceau de conduits 41 qui traversent la chambre 20. La paroi extérieure desdits conduits 41, dite «deuxième paroi», sépare le fluide dans les conduits 41 physiquement du milieu (air) dans la chambre 20. Cette paroi 41 fonctionne en tant que surface d'échange de chaleur entre l'air dans la chambre 20 et le fluide à préchauffer de manière à obtenir, pendant l'étape de chauffe, du fluide préchauffé 42. L'air dans la chambre 20 joue donc le rôle de fluide caloporteur entre les fumées chaudes 10 dans la canalisation 11 et le fluide à préchauffer dans les conduits 41. Le débit Df du fluide à préchauffer est régulé au moyen de la vanne 46 située sur le conduit d'écoulement reliant la source 45 avec le faisceau de conduits 41

Le fluide préchauffé 42 est ensuite évacué du faisceau de conduits 41 et amené vers le four 1, et plus particulièrement vers le ou les brûleurs 2. L'air 32 est évacué de la chambre 20.

Dans l'exemple illustré, le fluide à préchauffer est l'oxydant de combustion (comburant) issu de la source 45 et coule dans les conduits 41 en contre-courant avec l'air dans la chambre 20.

Le débit de combustible dirigé vers le four 1 (le ou les brûleurs 2) est régulé au moyen de la vanne 47 située sur le conduit d'écoulement reliant la source 43 avec le ou les brûleurs 2 du four 1.

L'unité de contrôle 60 régule :

- le fonctionnement de la soufflante 30 et donc le débit d'air ambiant introduit dans la chambre 20,
- l'ouverture de la vanne 46 et donc le débit Df d'oxydant 40 fourni au faisceau de conduits 41 et de là au four 1, ainsi que

- l'ouverture de la vanne 47 et donc le débit de combustible fourni au four 1.

A la fin de l'étape de chauffe, par exemple quand la charge présente dans le four 1 est entièrement fondue et, le cas échéant, également affinée, la charge peut être évacuée du four afin de permettre l'introduction d'une nouvelle charge dans le four. La combustion dans le four 1 est alors arrêtée et l'étape d'arrêt commence.

L'unité de contrôle 60 commande alors :

- la réduction de la vitesse et typiquement l'arrêt de la soufflante 30 de manière à ce que le débit Dm d'air ambiant introduit dans la chambre 20 est réduite d'au moins 50%, voire tombe à zéro ; la fermeture de la vanne 47 de manière à ce qu'il n'y a plus de fourniture de combustible au four 1 ; et
- la fermeture de la vanne 46 de manière à ce que le débit Df d'oxydant dirigé vers le faisceau de conduits 41 et de là vers le four 1 devient également zéro.

Grâce à la réduction, voire l'interruption, pendant l'étape d'arrêt, de l'introduction d'air ambiant dans la chambre 20, le refroidissement de la première paroi 21 en l'absence de fumées chaudes dans la canalisation 11 est ralenti, voire réduit quand la durée de l'étape d'arrêt est suffisamment courte.

On note également que, grâce à l'arrêt de l'écoulement d'oxydant 40 à l'intérieur du faisceau de conduits 41, le refroidissement de la deuxième paroi est également ralenti.

Suivant une forme de réalisation particulière, une vanne 48 permet de fermer la sortie de la chambre 20 de manière à ce que l'air présent dans la chambre 20 à un moment donné reste à l'intérieur de cette chambre 20.

L'ouverture (et donc également la fermeture), de la vanne 48 est également régulée par l'unité de contrôle 60. Il est alors possible de conserver l'air chauffé qui se trouve à l'intérieur de la chambre 20 à la fin de l'étape de chauffe à l'intérieur de la chambre 20 pendant l'étape d'arrêt en fermant la vanne 48 au début de l'étape d'arrêt, ralentissant ainsi encore plus le refroidissement de la première et de la deuxième parois pendant l'étape d'arrêt.

Au début de l'étape de redémarrage qui suit l'étape d'arrêt, l'unité de contrôle, on redémarre la combustion du combustible avec de l'oxydant 42.

A cette fin, l'unité de contrôle 60 commande au début de l'étape de redémarrage :

- l'ouverture de la vanne 47 de manière à fournir du combustible au four 1 ; et
- l'ouverture de la vanne 46 de manière diriger un débit Df > 0 d'oxydant vers le faisceau de conduits 41 et de là vers le four 1.

Les fumées chaudes 10 générées par la combustion dans le four 1 lors de l'étape de redémarrage sont évacuées du four 1 par la canalisation 11 où elles entrent en contact avec et chauffe la première paroi 21.

Au début de l'étape de redémarrage, l'unité de contrôle 60 augmente la vitesse de la soufflante 30 ou la redémarre (si la soufflante 30 était arrêtée pendant l'étape d'arrêt) de manière à ce qu'un débit d'air ambiant Dm régulé et supérieur au débit Dm pendant l'étape d'arrêt est fourni à la chambre 20 pendant l'étape de redémarrage. Dans le cas où la vanne 48 est présente et a été fermée pendant l'étape d'arrêt, l'unité de contrôle ouvre également cette vanne 48 afin de permettre le débit Dm d'être évacué après son passage à travers la chambre 20.

Le débit Dm d'air ambiant dans la chambre 20 pendant l'étape de redémarrage ralentit le chauffage de la première paroi 21 qui est également en contact avec les fumées évacuées 10.

Le débit Dm d'air ambiant dans la chambre 20 pendant l'étape de redémarrage est choisi de manière à ce que la première paroi 21 chauffe rapidement sans que la vitesse de chauffe $V_{T\uparrow}$ dépasse la limite supérieure prédéterminée $V_{T\uparrow max}$.

Suivant une forme de réalisation, le débit Dm pendant l'étape de redémarrage varie dans le temps selon une fonction prédéterminée.

Suivant une autre forme de réalisation illustrée dans la figure 1, la première paroi 21 est munie d'un détecteur de température 50 (thermocouple) qui détecte une température de la paroi 21 à un point de référence donné. Le détecteur de température 50 est connecté à l'unité de contrôle 60 qui détermine la vitesse de chauffe $V_{T\uparrow}$ sur la base de la température détectée. L'unité de control régule alors, par le biais de la soufflante 30, le débit Dm dans la chambre 20 pendant l'étape de redémarrage de manière à rapprocher cette vitesse de chauffe $V_{T\uparrow}$ de sa limite supérieure $V_{T\uparrow max}$ sans que toutefois $V_{T\uparrow}$ dépasse $V_{T\uparrow max}$, par exemple en respectant une marge prédéterminée entre $V_{T\uparrow}$ et $V_{T\uparrow max}$.

A la fin de l'étape de redémarrage, quand la première paroi 21 a ainsi atteint sa température opérationnelle, l'étape de redémarrage se termine et l'étape de chauffe suivante commence.

Quand le procédé suivant l'invention inclut la division du débit total du fluide fourni au four 1 en deux portions pendant l'étape de redémarrage comme décrite ci-dessus, l'unité de contrôle 60 régule avantageusement cette division du débit du fluide et l'évolution du rapport entre la seconde portion du fluide (qui coule à travers le faisceau de conduits 41) et le débit total du fluide pendant l'étape de redémarrage.

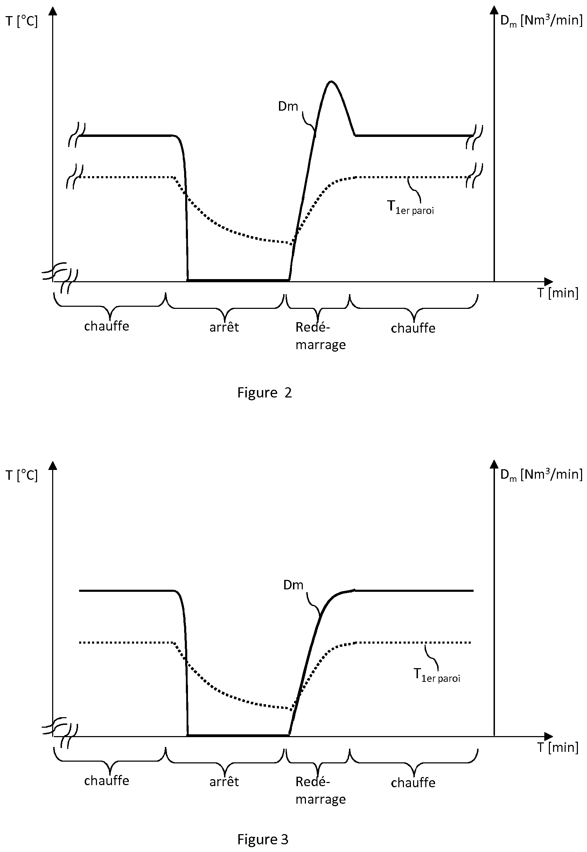

Les figures 2 et 3 montrent deux profils possibles du débit Dm pendant l'étape de redémarrage.

La figure 2 montre schématiquement un premier profil de Dm pendant les différentes étapes du procédé dans le cas où la limite supérieure $V_{T\uparrow max}$ de la vitesse de chauffe $V_{T\uparrow}$ de la première paroi 21 est relativement faible par rapport à la température des fumées chaudes évacuées du four 1, de manière à nécessiter lors de l'étape de redémarrage un débit Dm important, supérieur au débit Dm pendant l'étape de chauffe afin d'éviter que la première paroi soit thermiquement fragilisée au cours des cycles successifs du procédé.

Dans le cas de la figure 3, le rapport entre la limite supérieure $V_{T\uparrow max}$ de la vitesse de chauffe $V_{T\uparrow}$ de la première paroi 21 et la température des fumées chaudes évacuées du four 1 est plus élevée, de manière à ce qu'il est possible d'utiliser lors de l'étape de redémarrage un débit Dm inférieur au débit Dm lors de l'étape de chauffe afin d'éviter une chauffe trop rapide de la première paroi 21.

En réalisant ainsi en toute sécurité un refroidissement et une chauffe contrôlés de la première paroi 21 entre deux étapes de chauffe, l'invention permet de bénéficier des avantages du préchauffage de l'oxydant et/ou du combustible par échange thermique indirect avec les fumées évacué sans subir des pertes de temps inacceptable normalement associées avec la mise à température opérationnelle et le refroidissement du ou des échangeurs de chaleur.

Comme indiqué ci-dessus, il est indispensable qu'un refroidissement ou une (re)mise à température de l'échangeur se fasse progressivement et de manière contrôlée afin d'éviter des chocs thermiques susceptible de générer des fuites dans l'échangeur de chaleur. Un tel refroidissement et remise à température nécessiterait donc un temps non-négligeable qui dépasse généralement le temps nécessaire pour le déchargement et le rechargement du four.

Pour cette raison, le préchauffage de l'oxydant et/ou du combustible en amont du four par échange indirect avec les fumées évacuées du four n'est normalement pas rentable pour un four discontinu dont le fonctionnement inclut une étape d'arrêt lors de chaque cycle.

On note également que les fours discontinu sont généralement d'une taille relativement faible par rapport aux tailles que peuvent atteindre les fours continus pour le même type de procédé : par exemple les fours de fusion de verre discontinus par rapport au four de fusion de verre de type float. L'investissement dans une installation de préchauffage par échange indirect avec les fumées chaudes évacuées est donc relativement plus important (par rapport au prix du four et la production) pour un four discontinu que pour un four continu. Jusqu'à présent, l'amortissement de l'installation de préchauffage par échange indirect n'était ainsi pas possible sur une durée acceptable pour des fours discontinus.

Or, en réalisant en toute sécurité un refroidissement et une chauffe contrôlés de la première paroi entre deux étapes de chauffe, l'invention permet de bénéficier des avantages du préchauffage de l'oxydant et/ou du combustible par échange thermique indirect avec les fumées évacuées sans subir des pertes de temps inacceptable normalement associées avec la mise à température opérationnelle et le refroidissement du ou des échangeurs de chaleur.

Ainsi, la présente invention rend, pour la première fois le préchauffage de l'oxydant et/ou du combustible par échange thermique indirect avec les fumées efficace et rentable pour les fours discontinus.

**Revendications**

1. Procédé de fonctionnement d'un four (1) comportant une étape de chauffe pendant laquelle :

   (a) un combustible et un oxydant sont fournis au four (1) et le four (1) est chauffé par combustion du combustible avec l'oxydant avec génération de chaleur et de fumées (10), les fumées (10) étant évacuées du four (1) par une canalisation (11) et
   (b) on préchauffe au moins un fluide (40) choisi parmi le combustible et l'oxydant en amont du four (1) :

      • en introduisant un débit Dm > 0 d'un milieu liquide ou gazeux (31) dans une chambre (20) et en chauffant ledit milieu (31) par échange thermique avec les fumées (10) dans la canalisation (11) à travers une première paroi (21) qui sépare le milieu (31) dans la chambre (20) des fumées (10) dans la canalisation (11) avec obtention d'un milieu chauffé (32), la première paroi présentant alors une température dite température opérationnelle ; et
      • en introduisant un débit Df > 0 du fluide à préchauffer (40) dans au moins un conduit (41) de manière à préchauffer le fluide (40) par échange thermique avec le milieu chauffé (32) dans la chambre (20) à travers une deuxième paroi qui sépare le fluide (40) dans le au moins un conduit (41) du milieu chauffé (32) dans la chambre (20);

   le procédé étant **caractérisé** :

      • **en ce qu'**il comporte des cycles répétés de l'étape de chauffe, suivie d'une étape d'arrêt et d'une étape de redémarrage,
      • **en ce que** pendant l'étape d'arrêt :

         ○ la fourniture du combustible et de l'oxydant au four (1), la combustion du combustible avec l'oxydant dans le four (1) et l'évacuation de fumées (10) du four (1) par la canalisation (11) sont interrompues ; et
         ○ le débit Dm du milieu (31) dans la chambre (20) ne dépasse pas 50%, de préférence pas 25% et encore de préférence pas 10% du débit Dm pendant l'étape de chauffe ; et

• **en ce que** pendant l'étape de redémarrage :

◦ on recommence la fourniture du combustible et de l'oxydant au four (1), la combustion du combustible avec l'oxydant dans le four (1) et l'évacuation de fumées (10) du four (1) par la canalisation (11) ; et
◦ on introduit un débit Dm du milieu (31) dans la chambre qui est supérieur au débit Dm pendant l'étape d'arrêt et on régule le débit Dm de manière à limiter la vitesse de chauffe de la première paroi (21) pendant l'étape de redémarrage jusqu'à ce que la première paroi (21) atteigne la température opérationnelle à la fin de l'étape de redémarrage.

2. Procédé de fonctionnement suivant la revendication 1, dans lequel, pendant l'étape d'arrêt Dm = 0.

3. Procédé suivant l'une quelconque des revendications précédentes, dans lequel pendant l'étape de redémarrage, le débit Dm monte au-dessus du débit Dm pendant l'étape de chauffe pour ensuite revenir au débit Dm de l'étape de chauffe à la fin de l'étape de redémarrage.

4. Procédé suivant l'une quelconque des revendications précédentes, dans lequel pendant l'étape de redémarrage, le débit Dm ne dépasse pas le débit Dm pendant l'étape de chauffe.

5. Procédé suivant l'une des revendications précédentes, dans lequel on régule le débit Dm pendant l'étape de redémarrage de manière à ce que pendant l'étape de redémarrage la première paroi (21) chauffe à une vitesse de chauffe $V_{T\uparrow}$ qui est inférieure ou égale à une limite supérieure prédéterminée $V_{T\uparrow max}$.

6. Procédé suivant l'une quelconque des revendications précédentes, dans lequel pendant l'étape de redémarrage, le débit Dm évolue suivant une fonction prédéterminée.

7. Procédé suivant l'une quelconque des revendications 1 à 6, dans lequel, pendant l'étape de redémarrage :

• on détecte une température de la première paroi (21) et
• on régule le débit Dm en fonction de la vitesse de chauffe $V_{T\uparrow}$ déterminée à partir de la température détectée.

8. Procédé suivant l'une quelconque des revendications précédentes, dans lequel l'étape de chauffe est une étape de traitement thermique d'une charge dans le four (1), de préférence une étape de fusion ou de réchauffage de la charge.

9. Procédé suivant l'une quelconque des revendications précédentes, dans lequel pendant l'étape d'arrêt une charge chauffée est évacuée du four (1) et une charge à chauffer est introduite dans le four (1).

10. Procédé suivant l'une quelconque des revendications précédentes, dans lequel le milieu (31) est un milieu gazeux de préférence choisi parmi de l'air, de l'azote, du $CO_2$ ou de la vapeur, encore de préférence de l'air.

11. Procédé suivant l'une quelconque des revendications précédentes, dans lequel le fluide à préchauffer (40) est un oxydant avec une teneur en oxygène 50% vol et 100%vol, de préférence entre 80%vol et 100%vol.

12. Procédé suivant l'une des revendications 1 à 10, dans lequel on préchauffe de l'oxydant et du combustible pendant l'étape de chauffe.

13. Procédé suivant l'une quelconque des revendications précédentes, dans lequel le four (1) est choisi parmi les fours rotatifs de fusion de fonte, les fours rotatifs de fusion de métaux non-ferreux, les fours basculants de fusion de métaux non-ferreux, les fours rotatifs ou basculants pour la fusion des émaux et les fours de fusion de métaux de type four à arc.

14. Procédé suivant l'une quelconque des revendications précédentes, dans lequel, pendant l'étape de redémarrage, le fluide (40) est divisé en deux portions : une première portion et une seconde portion,

• la première portion du fluide étant fournie directement au four (1) sans passer à travers le au moins un conduit (41) et
• la seconde portion du fluide étant fournie au four (1) après avoir traversée le au moins un conduit (41).

15. Procédé suivant la revendication 14, dans lequel le rapport entre, d'une part, la seconde portion du fluide et, d'autre part, la somme de la première portion du fluide et la deuxième portion du fluide augmente au cours de l'étape de démarrage.

**Patentansprüche**

1. Verfahren zum Betrieb eines Ofens (1), umfassend einen Aufheizschritt, bei dem:

(a) der Ofen (1) mit einem Brennstoff und einem Oxidationsmittel beschickt wird und der Ofen (1) durch Verbrennung des Brennstoffs mit dem Oxidationsmittel unter Erzeugung von Wärme und Rauchgasen (10) erhitzt wird, wobei die Rauchgase (10) aus dem Ofen (1) durch eine Leitung (11) ausgeleitet werden, und

(b) mindestens ein Fluid (40), ausgewählt aus dem Brennstoff und dem Oxidationsmittel, stromaufwärts des Ofens (1) vorerhitzt wird:

• durch Einleiten eines Durchsatzes Dm > 0 eines flüssigen oder gasförmigen Mediums (31) in eine Kammer (20) und durch Erhitzen des Mediums (31) durch Wärmeaustausch mit den Rauchgasen (10) in der Leitung (11) über eine erste Wand (21), die das Medium (31) in der Kammer (20) von den Rauchgasen (10) in der Leitung (11) abtrennt, wobei ein erhitztes Medium (32) erhalten wird und wobei die erste Wand eine als Betriebstemperatur bezeichnete Temperatur aufweist, und
• durch Einleiten eines Durchsatzes Df > 0 des vorzuerhitzenden Fluids (40) in mindestens eine Leitung (41), so dass das Fluid (40) durch Wärmeaustausch mit dem erhitzten Medium (32) in der Kammer (20) über eine zweite Wand, die das Fluid (40) in der mindestens einen Leitung (41) vom erhitzten Medium (32) in der Kammer (20) abtrennt, vorerhitzt wird, wobei:

das Verfahren **dadurch gekennzeichnet ist, dass**

• es wiederholte Zyklen des Aufheizschritts, gefolgt von einem Halteschritt und einem Wiederanlaufschritt, umfasst:
• dass während des Halteschritts:

◦ die Beschickung des Ofens (1) mit Brennstoff und Oxidationsmittel, die Verbrennung des Brennstoffs mit dem Oxidationsmittel im Ofen (1) und die Ausleitung von Rauchgasen (10) aus dem Ofen (1) durch die Leitung (11) unterbrochen sind und
◦ der Durchsatz Dm des Mediums (31) in der Kammer (20) 50 %, vorzugsweise 25 % und noch stärker bevorzugt 10 % des Durchsatzes Dm während des Aufheizschritts nicht überschreitet und

• dass während des Wiederanlaufschritts:

◦ die Beschickung des Ofens (1) mit Brennstoff und Oxidationsmittel, die Verbrennung des Brennstoffs mit dem Oxidationsmittel im Ofen (1) und das Ausleiten von Rauchgasen (10) aus dem Ofen (1) durch die Leitung (11) wieder aufgenommen werden und
◦ ein Durchsatz Dm des Mediums (31) in die Kammer eingeleitet wird, der höher ist als der Durchsatz Dm während des Halteschritts, und der Durchsatz Dm so reguliert wird, dass die Aufheizgeschwindigkeit der ersten Wand (21) während des Wiederaufnahmeschritts eingeschränkt ist, bis die erste Wand (21) am Ende des Wiederaufnahmeschritts die Betriebstemperatur erreicht.

2. Betriebsverfahren nach Anspruch 1, wobei während des Halteschritts Dm = 0.

3. Verfahren nach einem der vorhergehenden Ansprüche, wobei während des Wiederaufnahmeschritts der Durchsatz Dm über den Durchsatz Dm während des Aufheizschritts ansteigt, um anschließend am Ende des Wiederaufnahmeschritts auf den Durchsatz Dm des Aufheizschritts zurückzukehren.

4. Verfahren nach einem der vorhergehenden Ansprüche, wobei während des Wiederaufnahmeschritts der Durchsatz Dm den Durchsatz Dm während des Aufheizschritts nicht überschreitet.

5. Verfahren nach einem der vorhergehenden Ansprüche, wobei man den Durchsatz Dm während des Wiederaufnahmeschritts so reguliert, dass sich während des Wiederaufnahmeschritts die erste Wand (21) mit einer Aufheizgeschwindigkeit $V_{T\uparrow}$ aufheizt, die kleiner oder gleich einer zuvor festgelegten oberen Grenze $V_{T\uparrow max}$ ist.

6. Verfahren nach einem der vorhergehenden Ansprüche, wobei sich während des Wiederaufnahmeschritts der Durchsatz Dm gemäß einer zuvor festgelegten Funktion entwickelt.

7. Verfahren nach einem der Ansprüche 1 bis 6, wobei man während des Wiederaufnahmeschritts:

• eine Temperatur der ersten Wand (21) misst und
• den Durchsatz Dm in Abhängigkeit von der aus der gemessenen Temperatur ermittelten Aufheizgeschwindigkeit $V_{T\uparrow}$ reguliert.

8. Verfahren nach einem der vorhergehenden Ansprüche, wobei es sich bei dem Aufheizschritt um einen Schritt der thermischen Behandlung einer Beschickung im Ofen (1), vorzugsweise einen Schritt des Schmelzens oder erneuten Erhitzens der Beschickung, handelt.

9. Verfahren nach einem der vorhergehenden Ansprüche, wobei während des Halteschritts eine erhitzte Beschickung aus dem Ofen (1) ausgetragen und eine zu erhitzende Beschickung in den Ofen (1) eingebracht wird.

**10.** Verfahren nach einem der vorhergehenden Ansprüche, wobei das Medium (31) ein gasförmiges Medium ist, das vorzugsweise aus Luft, Stickstoff, $CO_2$ oder Dampf, stärker bevorzugt aus Luft ausgewählt ist.

**11.** Verfahren nach einem der vorhergehenden Ansprüche, wobei das vorzuerhitzende Fluid (40) ein Oxidationsmittel mit einem Sauerstoffgehalt 50 Vol.-% und 100 Vol.-%, vorzugsweise zwischen 80 Vol.-% und 100 Vol.-% ist.

**12.** Verfahren nach einem der Ansprüche 1 bis 10, wobei man Oxidationsmittel und Brennstoff während des Aufheizschritts vorerhitzt.

**13.** Verfahren nach einem der vorhergehenden Ansprüche, wobei der Ofen (1) aus Drehrohröfen zum Schmelzen von Roheisen, Drehrohröfen zum Schmelzen von NichtEisen-Metallen, Kippöfen zum Schmelzen von NichtEisen-Metallen, Drehrohr- oder Kippöfen zum Schmelzen von Emaillen und Metallschmelzöfen des Lichtbogenofentyps ausgewählt ist.

**14.** Verfahren nach einem der vorhergehenden Ansprüche, wobei während des Wiederaufnahmeschritts das Fluid (40) in zwei Teile aufgeteilt wird: einen ersten Teil und einen zweiten Teil, wobei:

• der erste Teil des Fluids direkt zum Ofen (1) geleitet wird, ohne die mindestens eine Leitung (41) zu passieren, und
• der zweite Teil des Fluids dem Ofen (1) zugeleitet wird, nachdem er die mindestens eine Leitung (41) passiert hat.

**15.** Verfahren nach Anspruch 14, wobei das Verhältnis zwischen dem zweiten Teil des Fluids einerseits und der Summe des ersten Teils des Fluids und des zweiten Teils des Fluids andererseits im Verlauf des Aufnahmeschritts zunimmt.

**Claims**

**1.** Process for operating a furnace (1) comprising a heating step wherein:

(a) a fuel and an oxidant are supplied to the furnace (1) and the furnace (1) is heated by combustion of the fuel with the oxidant with generation of heat and flue gases (10), the flue gases (10) being discharged from the furnace (1) through a pipe (11) and
(b) at least one fluid (40) chosen from the fuel and the oxidant is preheated upstream of the furnace (1):

• by introducing a flow rate Dm > 0 of a liquid or gaseous medium (31) into a chamber (20) and by heating said medium (31) by heat exchange with the flue gases (10) in the pipe (11) across a first wall (21) which separates the medium (31) in the chamber (20) from the flue gases (10) in the pipe (11) with a heated medium (32) being obtained, the first wall then having a temperature referred to as operational temperature; and
• by introducing a flow rate Df > 0 of the fluid to be preheated (40) into at least one line (41) so as to preheat the fluid (40) by heat exchange with the heated medium (32) in the chamber (20) across a second wall which separates the fluid (40) in the at least one line (41) from the heated medium (32) in the chamber (20);

the process being **characterized**:

• **in that** it comprises repeated cycles of the heating step, followed by a shutdown step and by a restarting step,
• **in that** during the shutdown step:

○ the supply of the fuel and of the oxidant to the furnace (1), the combustion of the fuel with the oxidant in the furnace (1) and the discharge of flue gases (10) from the furnace (1) through the pipe (11) are interrupted; and ○ the flow rate Dm of the medium (31) in the chamber (20) does not exceed 50%, preferably does not exceed 25% and more preferably does not exceed 10% of the flow rate Dm during the heating step; and

• **in that** during the restarting step:

○ the supply of the fuel and of the oxidant to the furnace (1), the combustion of the fuel with the oxidant in the furnace (1) and the discharge of flue gases (10) from the furnace (1) through the pipe (11) are restarted; and
○ a flow rate Dm of the medium (31) is introduced into the chamber which is greater than the flow rate Dm during the shutdown step and the flow rate Dm is regulated so as to limit the rate of heating of the first wall (21) during the restarting step until the first wall (21) reaches the operational temperature at the end of the restarting step.

**2.** Operating process according to Claim 1, wherein, during the shutdown step, Dm = 0.

**3.** Process according to either one of the preceding claims, wherein, during the restarting step, the flow rate Dm rises above the flow rate Dm during the heating step in order to then return to the flow rate Dm of the heating step at the end of the restarting step.

**4.** Process according to any one of the preceding claims, wherein, during the restarting step, the flow rate Dm does not exceed the flow rate Dm during the heating step.

**5.** Process according to one of the preceding claims, wherein the flow rate Dm during the restarting step is regulated so that during the restarting step the first wall (21) heats at a heating rate $V_{T\uparrow}$ which is less than or equal to a predetermined upper limit $V_{T\uparrow max}$.

**6.** Process according to any one of the preceding claims, wherein, during the restarting step, the flow rate Dm changes according to a predetermined function.

**7.** Process according to any one of Claims 1 to 6, wherein, during the restarting step:

  • a temperature of the first wall (21) is detected and
  • the flow rate Dm is regulated as a function of the heating rate $V_{T\uparrow}$ determined from the detected temperature.

**8.** Process according to any one of the preceding claims, wherein the heating step is a step of heat treatment of a feedstock in the furnace (1), preferably a step of melting or reheating the feedstock.

**9.** Process according to any one of the preceding claims, wherein, during the shutdown step, a heated feedstock is discharged from the furnace (1) and a feedstock to be heated is introduced into the furnace (1).

**10.** Process according to any one of the preceding claims, wherein the medium (31) is a gaseous medium preferably chosen from air, nitrogen, $CO_2$ or steam, more preferably air.

**11.** Process according to any one of the preceding claims, wherein the fluid to be preheated (40) is an oxidant with an oxygen content 50 vol% and 100 vol%, preferably between 80 vol% and 100 vol%.

**12.** Process according to one of Claims 1 to 10, wherein oxidant and fuel are preheated during the heating step.

**13.** Process according to any one of the preceding claims, wherein the furnace (1) is chosen from rotary furnaces for smelting of cast iron, rotary furnaces for smelting of nonferrous metals, tilting furnaces for smelting of nonferrous metals, rotary or tilting furnaces for smelting of enamels, and furnaces for smelting of metals of electric arc furnace type.

**14.** Process according to any one of the preceding claims, wherein, during the restarting step, the fluid (40) is split into two portions: a first portion and a second portion,

  • the first portion of the fluid being supplied directly to the furnace (1) without passing through the at least one line (41) and
  • the second portion of the fluid being supplied to the furnace (1) after having passed through the at least one line (41).

**15.** Process according to Claim 14, wherein the ratio between, on the one hand, the second portion of the fluid and, on the other hand, the sum of the first portion of the fluid and the second portion of the fluid increases during the starting step.

Figure 1

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006054015 A
- FR 1656584